# EUROPEAN PATENT SPECIFICATION

(11) **EP 2 738 508 B1**
(45) Date of publication and mention of the grant of the patent: **12.08.2015**
(21) Application number: 12425188.5
(22) Date of filing: 28.11.2012
(51) Int. Cl.: F28D 20/00

(54) **Modular tank**
Modularer Tank
Réservoir modulaire

(43) Date of publication of application: 04.06.2014
(73) Proprietor: Solarenet S.r.l., 25136 Brescia (IT)
(72) Inventor: Peruchetti, Enrico, 25122 Brescia (IT)
(74) Representative: Eterno, Enrico

(56) References cited:
- EP-A1- 0 031 153
- DE-A1- 19 907 975
- FR-A1- 2 405 443
- FR-A5- 2 095 739
- JP-U- S5 874 047

## Description

The present invention relates to a modular storage tank for containing liquids, in particular for housing hot water, according to the preamble of claim 1. Such a storage is known for example from DE 199 07 975 A1 and EP 0 031 153 A.

In the civil and industrial construction industry the use of containers for storing hot water coming from boilers or from other heating means, such as solar panels, biomass or heat pump systems, is known of. These containers make the water previously heated available to the various home or plant utilities, avoiding the down time which the raising of the temperature of such liquid would require, and in general for separating temporally production and consumption.

The known systems have a plurality of drawbacks however, first of all the subjective difficulties of installation of containers having significant inner volumes and thereby external dimensions.

Such drawback arises already in implementing such recipients when building properties but is even more marked in the circumstances in which an existing plant needs to be replaced, for example following wear or corrosion; in fact, the space available to the installers of the new plant is often limited or even insufficient.

As a result, in order to overcome the above drawback, the tank according to the present invention is modular so as to permit its assembly *in situ,* so that plants of whatever capacity wished may be installed regardless of the space available to the installers for manoeuvre.

Such objective is achieved by a tank according to claim 1. The dependent claims describe preferred embodiments.

The object of the present invention will now be described in detail with the help of the enclosed drawings wherein:

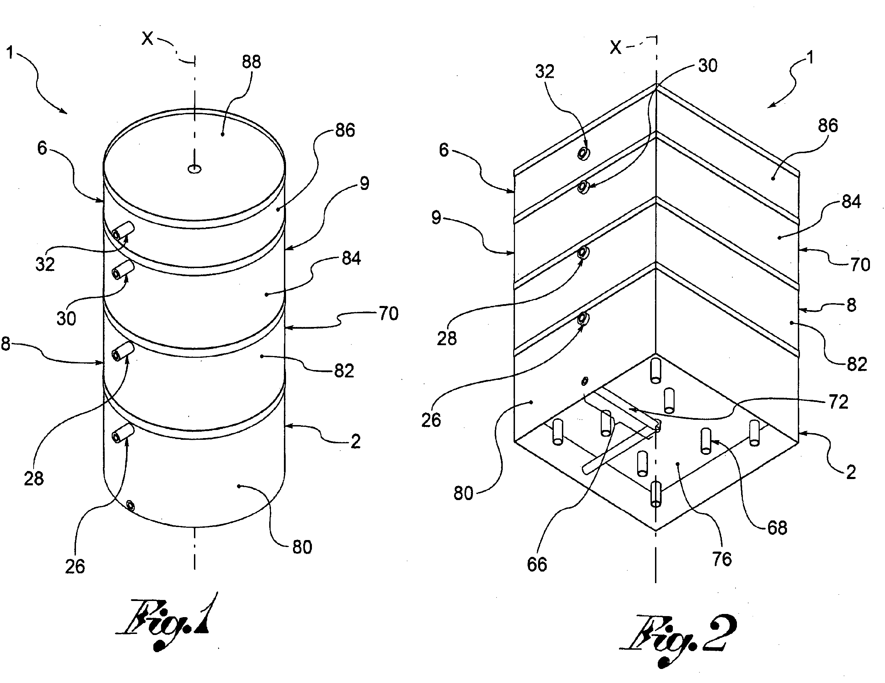

- figures 1 and 2 each show a tank according to the present invention, according to two different embodiments;

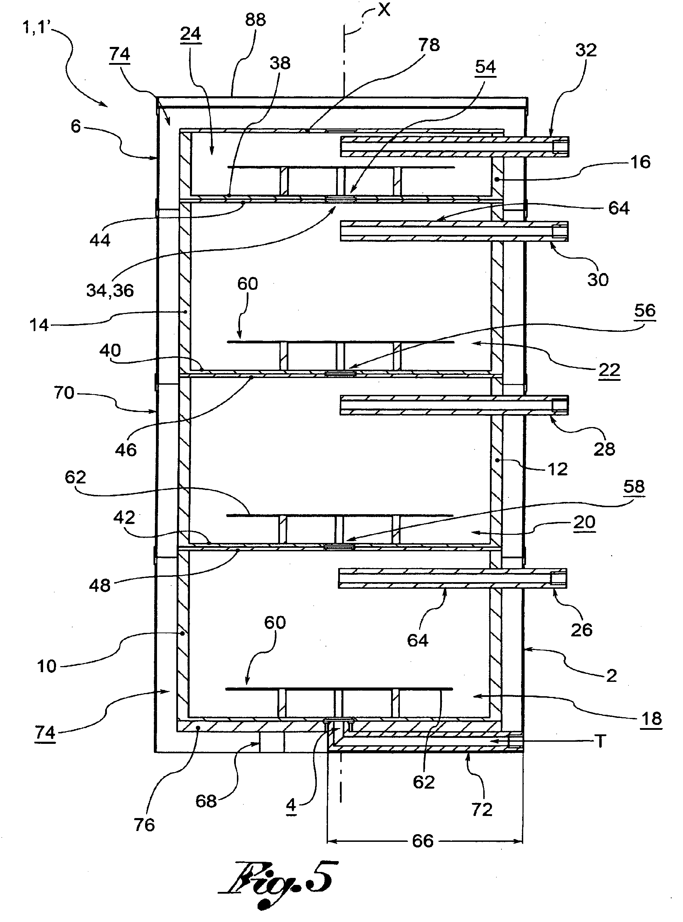

- figures 3 to 5 respectively show a view from above, a view from below ad a longitudinal cross-section view of the tank in figure 1;

-figures 6 and 7 show a side view and a cross-section side view of a male connector and a female connector according to one possible embodiment.

With reference to the aforesaid drawings, reference numerals 1, 1' globally denote two modular storage tanks for containing liquids, according to two variations of the present invention.

In fact, according to such embodiments, the modular tank may have a circular, ellipsoidal or polygonal for example square or rectangular symmetric transversal cross-section.

In this context "transversal" is taken to mean a cross-section along a plane substantially orthogonal to a main extension direction of the tank or tank axis X.

In addition, the "axial", "radial" or "tangential" directions are understood to refer to the tank axis X, unless otherwise specified.

Consequently, since the two embodiments of the tank shown differ in substance only in the different shape of the transversal cross-section, the components common to both embodiments will have the same reference numerals.

The present tank is particularly suitable for containing hot water, for example for residential or industrial use, despite further embodiments envisaging different applications from those specifically expressed. Merely by way of example, such container may be used to contain hydrocarbons, liquid foods etc.

The modular tank 1, 1' comprises a lower module 2, an upper module 6 on top of the lower module 2 and one or more intermediate modules 8, 9, positioned in a releasable manner between the lower module 2 and the upper module 6.

The aforesaid modules 2,6,8,9 are therefore suitable for being reciprocally connected, and can advantageously be stacked on top of each other up to a desired height and/or total inner volume.

For example, according to such technical solution, the modules can be transported separately thereby occupying a relatively limited space and be assembled *in situ* to make one or more structures even of considerable size in limited spaces.

Furthermore, the modules 2, 6, 8, 9 may have identical inner volumes or differ depending on contingencies. For example, the upper module shown in the drawings has a smaller volume than the modules underneath it, the latter having substantially the same volume as each other.

In the embodiments shown, the lower module is predisposed for resting on the ground, being fitted for example with a lower support base 76. Advantageously, such base 76 may be raised from the support surface (such as the floor) by means of a spacer element 68, in particular a support, foot or the like. For example, a plurality of spacer elements 68 may be distributed along a lower surface of the lower support base 76. Alternatively, the lower module 2 may have features suitable for resting directly on the ground (appropriate thicknesses of the bottom and/or specific geometrics), in the absence of spacers, feet or the like.

Each of the aforesaid modules 2, 6, 8, 9 comprises a side wall 10,12,14,16 which extends around the tank axis X, and at least one wall 38,40,42,44,46,48 positioned transversally to such axis X between at least one pair of modules to define a separate module chamber 18,20,22,24.

In other words, the lower module 2 comprises a first side wall 10, the upper module 6 comprises a second side wall 16, and the at least one intermediate module 18, 19 comprises a third 14 (and, optionally fourth 12) side wall, such walls being preferably substantially aligned parallel to the tank axis X. Moreover, between at least one pair of modules the aforesaid transversal wall 38, 40, 42, 44, 46, 48 is envisaged, which divides the inner space of the tank. Preferably, such a wall is envisaged for each pair of modules and relative chambers.

In yet other words, the tank 1, 1' according to this variation comprises a substantially cylindrical outer profile, although other embodiments envisage other outer profiles.

Optionally, the tank 1, 1' may comprise an outer casing 70, for example heat-insulating, which mainly contains at least the modules 6,8,9, positioned above the lower module 2, but which preferably (as shown in the drawings) contains all the modules forming the tank.

According to a particularly advantageous variation, the outer casing 70 consists of a plurality of casing elements 80,82,84,86 fitted coaxially to the modules 2,6,8,9. For example, the casing elements can be connected to each other in a releasable manner, so that the construction of such casing may take place in subsequent steps, handling materials of limited dimensions. In other words, the outer casing 70 is also constructed in a modular manner, preferably with modules having a height substantially corresponding to the "containment" modules 2,6,8,9 of the tank.

According to one embodiment, the outer casing 70 is at least partially closed by a cover element 88, positioned in particular in abutment with the top casing element 86.

According to a preferred embodiment, the outer casing 70 defines with the side walls 10,12,14,16 at least one insulation cavity 74 of the tank in relation to the area outside the tank, which represents an empty space or space which can be filled with a heat-insulation material.

As said, the module chambers 18,20,22,24 are separated from each other physically, preferably by the interposition of a plurality of walls 38,40,42,44,46,48 positioned transversally to the aforesaid axis X, so that the presence of such walls favours a division of the liquid having different physical (or chemical) properties in the separate module chambers 18,20,22,44.

According to a preferred embodiment, the liquid supplied to the tank 1, 1' is heated (in other words has an average temperature higher than room temperature) so that, by virtue of the tendency of hotter fluids to position themselves above colder fluids, the liquid contained in the module chambers has a temperature increasing vertically from the lower module 2 to the upper module 6. This module will therefore contain the hottest water in the tank, without any mixing with the water at a lower temperature contained in the chambers underneath taking place.

Nonetheless, the module chambers 18,20,22,24 are fluidically connected or suitable for being fluidically connected to each other; consequently, according to one advantageous implementation, a plurality of inner apertures 54, 56, 58 defined by the modules 2,6,8,9 and in particular crossing the upper 44, 46, 48 and /or lower walls 38, 40, 42 of said modules, are envisaged for the passage (preferably limited) of the liquid between adjacent modules.

Optionally, at one or more inner apertures 54, 56, 58 shut-off means may be envisaged to allow/prevent the transit of liquid between the module chambers. In this sense, the chambers therefore prove reversibly suitable for fluidic connection by operation of the shut-off means.

According to a preferred embodiment, each side wall 10, 12, 14, 16 is connected to a respective upper wall 44, 46, 48, 78 and to a respective lower wall 38, 40, 42, 76, the latter being axially separated; this way, each module assumes the shape of a cylindrical section.

Advantageously, the modules are made in a polymer material, for example by blow moulding or moulding, so that each side wall is in one piece with the respective upper and lower wall. According to an alternative manufacturing method, the modules may be made in a polymer material with cutting, bending and welding operations of flat sheets so as to obtain elements of customised dimensions on the basis of the specific installation.

The modular tank 1, 1' further comprises at least one input aperture 4 of the liquid inside the tank 1, 1' and one or more exit passages 26,28,30,32 of the liquid from such tank, respectively suitable for connecting up to fluidic supply means (in particular water) and to at least one external utility or a further tank (of the same type as the invention or different). In the embodiment shown, a single input aperture 4 associated to the lower module 2 is indicated.

In the context of the present description it may be hypothesised that at least one input aperture and/or at least one exit passage is configured to be traversed by the fluid in opposite transit directions; in other words, despite a preferential direction of transit (therefore in function of the aperture and passages) having been defined for the purposes of clarity of the present description, each of the passages or apertures may be used to supply the fluid to the tank, or conversely to withdraw fluid therefrom, for example alternately.

Preferably, a plurality of such exit passages 26,28,30,32 is envisaged, in particular at least one associated to each module 2,6,8,9 being envisaged, axially distanced to permit a withdrawal or introduction of the liquid at different heights of the tank 1,1'.

Consequently, the exit passages permit the liquid to be drawn at different heights of the tank, which according to the previous variations, correspond to different physical (or chemical) liquid properties.

In other words, since each module defines and contains a liquid preferably at a specific temperature, different utilities can draw the liquid from different exit passages so as to use the liquid with the most suitable features for the specific purpose.

As discussed above, such passages could just as well be used to introduce liquid at one or more specific heights of the tank, for example so as to create, at that height, the minimum disturbance of the system by virtue of a smaller heat gradient.

According to a preferred embodiment, at least one exit passage 26, 28, 30 32 comprises a duct 64 which projects into the module chamber 18, 20, 22, 24 at a predefined distance from the side wall 10, 12, 14, 16, so as to extract the liquid from a central zone or from a zone proximal to the centre of the tank 1,1'.

In other words, since inside each module chamber a certain filling turbulence is favoured and therefore a certain mixing of the liquid, a withdrawal in an area detached from the centre of the tank is a guarantee of liquid with homogeneous properties (for example temperature).

For example, the ducts 64 are substantially rectilinear. Such ducts may be placed in the module chambers with a radial (as shown) or tangential orientation.

According to the variation shown, the tank 1, 1' comprises at least one supply passage 72 connected upstream of the input aperture 4 to supply the liquid to the tank. For example, such passage may be operatively connected to the fluidic supply means, in particular to a municipal water supply.

In the present description the terms "upstream" and "downstream" shall refer to the direction of transit T of the liquid in the tank when this supplies the liquid to the utilities; in the variation shown, the direction T is oriented upwards along the tank axis for transit between various modules, and is radially positioned in relation to the aforesaid axis X for the exit of the liquid from the exit passage 26,28,30,32 or plurality thereof. According to further embodiments, such direction could however be inverted, in particular oriented first radially inwards then axially downwards.

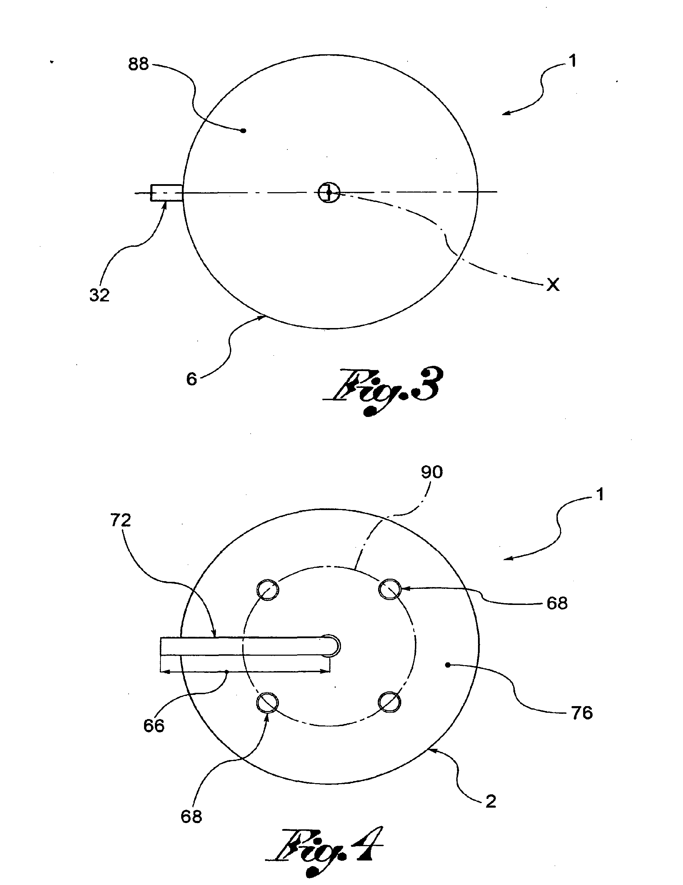

In the embodiments shown, at least a section 66 of the supply passage 72 transits under the lower module 2; to such purpose, the lower module 2 may be fitted with at least one spacer element 68 described above which raises it to prevent the crushing of such section 66. In the variation shown in figure 4, a plurality of spacer elements 68 is distributed along an imaginary arc of a circle 90, shown by the dotted line in such drawing.

According to a particularly advantageous embodiment, a pair of adjacent modules comprise complementary coupling means 34, 36 to form the fluidic connection between the respective module chambers 22, 24. Preferably, such means (and in particular the connectors described below) interact in the absence of threaded portions or further mechanical coupling components.

This way, the fluidic connection and watertight seal of the connection are performed in the same operation.

According to one embodiment, the complementary coupling means 34, 36 comprise at least one male connector 34 and one female connector 36, at least one of which advantageously defines the inner aperture 54, 56, 58.

According to one implementation of the invention, the female connector 36 is positioned at a lower wall 38, 40, 42 of the module vertically above it, and the male connector 34 is positioned at an upper wall 44, 46, 48 of the module underneath it so that the weight of the module above contributes to maintaining the coupling between such connectors 34, 36, thereby ensuring the fluidic sealing thereof.

Moreover, a further technical effect related to such arrangement regards the impossibility of damaging the male connector 34 when the modules are dismantled from each other; in fact, when such modules are placed on the ground while awaiting stacking, the male connector (necessarily projecting) is on the opposite side to the support surface defined by any one of the lower walls 38, 40, 42.

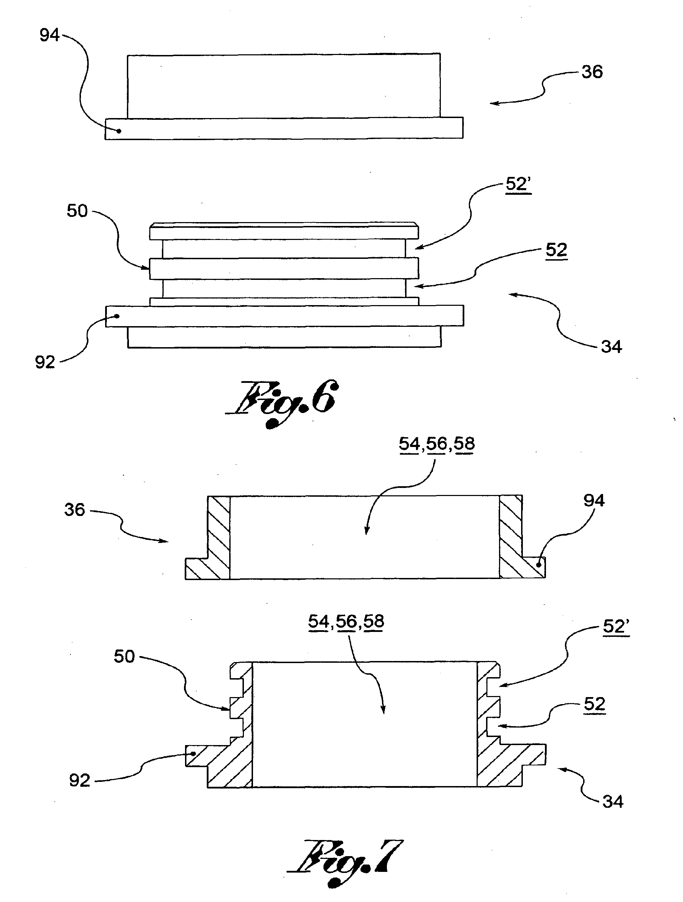

In the embodiment shown in figures 6 and 7, the male connector 34 comprises a generally cylindrical (or truncated cone-shaped) body 50 which defines a pair of axially distanced recessed seats 52, 52' (for example parallel to the tank axis X), to house the sealing elements, for example O-rings or gaskets.

This way, the sealing elements remained localised in a specific axial position, and are at least partially housed in said seats so as not to be damaged by the insertion of the male connector with the female connector.

Again according to the variation shown, at least one of the male or female connectors (preferably both) comprises an annular lip (92, 94 which extends radially externally from a respective tubular body and which preferably forms an abutment or blocking portion of the connector with the relative module.

According to the invention a deviator component 60 is provided frontally to at least one inner aperture 54, 56, 58 to increase the time of permanence of the liquid in the tank 1, 1'.

In fact, taking for example the entrance of the liquid in the first intermediate module 8, the fluid entering from the inner aperture 58 cannot continue its axial course towards the inner aperture numbered 56 in that by virtue of the interposition of the deviator element 60, such liquid is forced to follow a winding path (for example radially diverging) to reach the aperture 56 or the exit passage 28.

Moreover, the deviator component 60 is suitable for preventing heat gradients from establishing themselves in the module chambers in an orthogonal direction to the tank axis X, while it favours such phenomenon along the axis X.

The deviator component 60 comprises a deviation plate 62, optionally in polymer material of sufficiently large size to distribute the incoming liquid along a transversal surface greater than the through cross-section of at least one of the inner apertures. For example, the plate 62 covers a surface representing over 50% of the surface of the upper or lower wall of the individual module, preferably more than 80% of such upper or lower surface, advantageously an area below 95% thereof.

Such plate 62 may be connected and extend in the module chamber 18,20,22,24 from a lower wall 38, 40, 42 of each module 2,6,8,9.

Such arrangement has in fact the advantage, according to a principle symmetrical to the one discussed above, of limiting the outflow of fluid from an overlying module to an underlying module.

Innovatively, the tank according to the present invention makes it possible to make containers of any inner volume desired without pre-existing architectural features or logistical constraints limiting its use.

Advantageously, the tank according to the present invention makes it possible to make a fast, sealed connection by the mere operation of stacking the various modules of the tank.

Advantageously, the tank according to the present invention makes it possible to homogenise the temperature inside each single chamber but nonetheless to favour a stratification of heat zones increasing upwardly.

Advantageously, the tank according to the present invention forms a reliable heat storage, able to efficiently reduce the energy dissipation of the liquid introduced therein.

Advantageously, given the technical characteristics described, the replacement of a single module does not necessarily entail emptying the entire tank.

A person skilled in the art may make variations to the aforesaid embodiments of the tank, replacing elements with others functionally equivalent so as to satisfy specific requirements.

For example, one embodiment of the aforesaid tank (not shown) could envisage that the lower module, upper module and intermediate module (or plurality thereof), are positioned alongside each other horizontally as opposed to being stacked.

Such variations are also contained within the sphere of protection as defined by the appended claims.

Moreover, each variation described as belonging to a possible embodiment may be realised independently of the other variations described.

## Claims

1. Modular tank (1, 1') for containing liquids, in particular hot water, comprising:
- a lower module (2), for example resting on the ground;
- an upper module (6) overlying the lower module (2);
- one or more intermediate modules (8, 9) positioned in a releasable manner between the lower module (2) and the upper module (6);
wherein each of said modules (2,6,8,9) comprises a side wall (10,12,14,16) which extends around a tank axis (X) and at least one wall (38,40,42,44,46,48) positioned transversally to said axis (X) between at least one pair of modules to define a separate module chamber (18,20,22,24);
the module chambers (18,20,22,24) being fluidically connected or connectable through inner apertures (54, 56, 58) defined by the modules (2, 6, 8, 9) for the passage of liquid between adjacent modules;
- at least one input aperture (4) of the liquid inside the tank (1, 1') and one or more exit passages (26,28,30,32) of the liquid from the modular tank (1) respectively suitable for connecting up to fluidic supply means and to at least one external utility or a further tank;
said tank being **characterized in that** a deviator component (60) comprising a deviation plate (62) is provided frontally to at least one inner aperture (54, 56, 58) to increase the residence time of the liquid in the tank (1, 1'), said plate (62) being of sufficiently large size to distribute the incoming liquid along a transversal surface greater than the cross-section of at least one of the inner apertures (54, 56, 58).

2. Tank according to claim 1, wherein each pair of adjacent modules comprises complementary coupling means (34,36) to form the fluidic connection between the respective module chambers (22,24), said means comprising at least one male connector (34) and one female connector (36).

3. Tank according to claim 2, wherein the female connector (36) is positioned at a lower wall (38,40,42) of the module vertically above it, and the male connector (34) is positioned at an upper wall (44,46,48) of the module underneath it so that the weight of the module above contributes to maintaining the coupling between said connectors (34,36).

4. Tank according to claim 3, wherein said connectors (34, 36) interact in the absence of threaded portions or further mechanical coupling components.

5. Tank according to any of the claims from 2 to 4, wherein the male connector (34) comprises a generally cylindrical or truncated cone-shaped body (50) which defines a pair of axially distanced recessed seats (52, 52') for housing the sealing elements, for example O-rings or gaskets.

6. Tank according to the previous claim, wherein said sealing elements comprise O-rings or gaskets.

7. Tank according to any of the previous claims, wherein the deviation plate (62) is made in a polymer material.

8. Tank according to any of the previous claims, wherein the deviator plate (62) is connected and extends in the module chamber (18,20,22,24) from a lower wall (38, 40, 42) of each module (2, 6, 8, 9).

9. Tank according to any of the previous claims, comprising a plurality of exit passages (26,28,30,32) for example one associated to each module (2,6,8,9) axially distanced to permit a withdrawal of the liquid at different heights of the tank (1,1').

10. Tank according to claim 9, wherein at least one exit passage (26, 28, 30 32) comprises a duct (64) which projects into the module chamber (18, 20, 22, 24) at a predefined distance from the side wall (10, 12, 14, 16) so as to extract the liquid from a central zone or from a zone proximal to the centre of the tank (1, 1').

11. Tank according to any of the previous claims, comprising at least one supply passage (72) connected upstream of the input aperture (4) to supply the liquid, at least one section (66) of said passage (72) transiting under the lower module (2), said module (2) comprising at least one spacer element (68) which raises it to prevent crushing of said section (66).

12. Tank according to any of the previous claims, comprising an outer casing (70), for example heat-insulating, which mainly contains at least the modules (6,8,9) positioned above the lower module (2), said outer casing defining with the side walls (10,12,14,16) at least one insulation cavity (74).

13. Tank according to any of the previous claims, having a circular-, ellipsoidal- or polygonal-, for example square or rectangular, symmetric transversal cross-section.

14. Tank according to any of the previous claims, modified in that the lower module (2), upper module (6) and at least one intermediate module (8, 9) are positioned horizontally alongside each other.

## Patentansprüche

1. Modularer Tank (1, 1') zum Aufnehmen von Flüssigkeiten, insbesondere heißem Wasser, umfassend:
- ein unteres Modul (2), das zum Beispiel auf dem Boden aufliegt;
- ein oberes Modul (6), das über dem unteren Modul (2) liegt;
- ein oder mehrere Zwischenmodul/Zwischenmodule (8, 9), das/die in lösbarer Weise zwischen dem unteren Modul (2) und dem oberen Modul (6) platziert ist/sind;
wobei jedes der Module (2, 6, 8, 9) eine Seitenwand (10, 12, 14, 16), die um eine Tankachse (X) verläuft, und wenigstens eine Wand (38, 40, 42, 44, 46, 48) umfasst, die transversal zu der Achse (X) zwischen wenigstens einem Modulpaar platziert ist, um eine separate Modulkammer (18, 20, 22, 24) festzulegen;
wobei die Modulkammern (18, 20, 22, 24) fluidverbunden oder durch innere Öffnungen (54, 56, 58) verbindbar sind, welche durch die Module (2, 6, 8, 9) für den Durchlass von Flüssigkeit zwischen benachbarten Modulen festgelegt sind;
- wenigstens eine Eingangsöffnung (4) der Flüssigkeit innerhalb des Tanks (1, 1') und einen oder mehrere Ausgangsdurchlass/Ausgangsdurchlässe (26, 28, 30, 32) der Flüssigkeit aus dem modularen Tank (1), der/die jeweils dazu geeignet ist/sind, an Fluidzufuhrmittel und an wenigstens einen äußeren Verbraucher oder einen weiteren Tank gekoppelt zu sein;
wobei der Tank **dadurch kennzeichnet ist, dass** eine Umleiterkomponente (60), die eine Umleitungsplatte (62) umfasst, frontal an wenigstens einer inneren Öffnung (54, 56, 58) bereitgestellt ist, um die Verweildauer der Flüssigkeit in dem Tank (1, 1') zu erhöhen, wobei die Platte (62) von ausreichend großem Ausmaß ist, um die hereinkommende Flüssigkeit entlang einer transversalen Oberfläche zu verteilen, die größer ist als der Querschnitt wenigstens einer der der inneren Öffnungen (54, 56, 58).

2. Tank nach Anspruch 1, wobei jedes Paar von benachbarten Modulen komplementäre Kopplungsmittel (34, 36) umfasst, um die Fluidverbindung zwischen den jeweiligen Modulkammern (22, 24) zu bilden, wobei die Mittel wenigstens einen Steckverbinder (34) und einen Buchsenverbinder (36) umfassen.

3. Tank nach Anspruch 2, wobei der Buchsenverbinder (36) an einer unteren Wand (38, 40, 42) des Moduls vertikal darüber platziert ist, und wobei der Steckverbinder (34) an einer oberen Wand (44, 46, 48) des Moduls darunter platziert ist, sodass das Gewicht des Moduls darüber zu dem Aufrechterhalten der Kopplung zwischen den Verbindern (34, 36) beiträgt.

4. Tank nach Anspruch 3, wobei die Verbinder (34, 36) in Abwesenheit von Gewindeabschnitten oder anderen mechanischen Kopplungskomponenten zusammenwirken.

5. Tank nach irgendeinem der Ansprüche 2 bis 4, wobei der Steckverbinder (34) einen grundsätzlich zylindrischen oder kegelstumpfartigen, konischen Körper (50) umfasst, der ein Paar von axial beabstandeten, vertieften Aufnahmen (52, 52') festlegt, um die Dichtelemente, zum Beispiel O-Ringe oder Flachdichtungen/Dichtringe, aufzunehmen.

6. Tank nach dem vorhergehenden Anspruch, wobei die Dichtelemente O-Ringe oder Flachdichtungen/Dichtringe umfassen.

7. Tank nach irgendeinem der vorhergehenden Ansprüche, wobei die Umleitungsplatte (62) aus einem Polymermaterial hergestellt ist.

8. Tank nach irgendeinem der vorhergehenden Ansprüche, wobei die Umleiterplatte (62) gekoppelt ist und sich in der Modulkammer (18, 20, 22, 24) von einer unteren Wand (38, 40, 42) eines jeden Moduls (2, 6, 8, 9) erstreckt.

9. Tank nach irgendeinem der vorhergehenden Ansprüche, umfassend eine Mehrzahl an Ausgangsdurchlässen (26, 28, 30, 32), zum Beispiel zu jedem Modul (2, 6, 8, 9) einen zugehörigen, die axial beabstandet sind, um einen Austritt der Flüssigkeit an verschiedenen Höhen des Tanks (1, 1') zu erlauben.

10. Tank nach Anspruch 9, wobei wenigstens ein Ausgangsdurchlass (26, 28, 30, 32) ein Rohr (64) umfasst, das in einem vorher festgelegten Abstand von der Seitenwand (10, 12, 14, 16) in die Modulkammer (18, 20, 22, 24) hineinragt, um die Flüssigkeit aus einem zentralen Bereich oder aus einem dem Zentrum des Tanks (1, 1') nahen Bereich zu entnehmen.

11. Tank nach irgendeinem der vorhergehenden Ansprüche, umfassend wenigstens einen Zufuhrdurchlass (72), der der Eingangsöffnung (4) vorgeschaltet verbunden ist, zum Zuführen der Flüssigkeit, wobei wenigstens ein Abschnitt (66) des Durchlasses (72) unter dem unteren Modul (2) durchführt, wobei das Modul (2) wenigstens ein Abstandshalterelement (68) umfasst, das es anhebt, um ein Zerquetschen des Abschnitts (66) zu verhindern.

12. Tank nach irgendeinem der vorhergehenden Ansprüche, umfassend eine äußere Umhüllung (70), zum Beispiel wärmeisolierend, die hauptsächlich wenigstens die Module (6, 8, 9) beinhaltet, die oberhalb des unteren Moduls (2) platziert sind, wobei die äußere Umhüllung mit den Seitenwänden (10, 12, 14, 16) wenigstens einen Isolationshohlraum (74) festlegt.

13. Tank nach irgendeinem der vorhergehenden Ansprüche, der einen kreisförmigen, ellipsoidalen oder polygonalen, zum Beispiel quadratischen oder rechteckigen, symmetrischen, transversalen Querschnitt aufweist.

14. Tank nach irgendeinem der vorhergehenden Ansprüche, der insofern modifiziert ist, dass das untere Modul (2), das obere Modul (6) und wenigstens ein Zwischenmodul (8, 9) waagerecht zueinander längsseits platziert sind.

## Revendications

1. Réservoir modulaire (1, 1') pour contenir des liquides, en particulier de l'eau chaude, comprenant :
- un module inférieur (2), par exemple reposant sur le sol ;
- un module supérieur (6) au-dessus du module inférieur (2) ;
- un ou plusieurs modules intermédiaires (8, 9) positionnés de manière libérable entre le module inférieur (2) et le module supérieur (6) ;
dans lequel chacun desdits modules (2, 6, 8, 9) comprend une paroi latérale (10, 12, 14, 16) qui s'étend autour d'un axe de réservoir (X) et au moins une paroi (38, 40, 42, 44, 46, 48) positionnée transversalement audit axe (X) entre au moins une paire de modules pour définir une chambre de module (18, 20, 22, 24) séparée ;
les chambres de module (18, 20, 22, 24) étant raccordées ou raccordables fluidiquement par l'intermédiaire d'ouvertures intérieures (54, 56, 58) définies par les modules (2, 6, 8, 9) pour le passage de liquide entre des modules adjacents ;
- au moins une ouverture d'entrée (4) du liquide à l'intérieur du réservoir (1, 1') et un ou plusieurs passages de sortie (26, 28, 30, 32) du liquide à partir du réservoir modulaire (1) respectivement appropriés pour se raccorder à des moyens d'alimentation fluidique et à au moins un fournisseur externe ou un réservoir supplémentaire ;
ledit réservoir étant **caractérisé en ce qu'**un composant déviateur (60) comprenant une plaque de déviation (62) est prévu frontalement sur au moins une ouverture intérieure (54, 56, 58) pour augmenter le temps de séjour du liquide dans le réservoir (1, 1'), ladite plaque (62) étant de taille suffisamment importante pour distribuer le liquide entrant le long d'une surface transversale plus grande que la section transversale d'au moins une des ouvertures intérieures (54, 56, 58).

2. Réservoir selon la revendication 1, dans lequel chaque paire de modules adjacents comprend des moyens d'accouplement complémentaires (34, 36) pour former le raccord fluidique entre les chambres de module respectives (22, 24), lesdits moyens comprenant au moins un raccord mâle (34) et un raccord femelle (36).

3. Réservoir selon la revendication 2, dans lequel le raccord femelle (36) est positionné sur une paroi inférieure (38, 40, 42) du module verticalement au-dessus de lui, et le raccord mâle (34) est positionné sur une paroi supérieure (44, 46, 48) du module en dessous de lui afin que le poids du module au-dessus contribue au maintien de l'accouplement entre lesdits raccords (34, 36).

4. Réservoir selon la revendication 3, dans lequel lesdits raccords (34, 36) interagissent en l'absence de parties filetées ou de composants d'accouplement mécanique supplémentaires.

5. Réservoir selon une quelconque des revendications 2 à 4, dans lequel le raccord mâle (34) comprend un corps de forme généralement cylindrique ou tronconique (50) qui définit une paire de sièges évidés éloignés axialement (52, 52') pour loger les éléments d'étanchéité, par exemple des joints toriques ou autres joint.

6. Réservoir selon la revendication précédente, dans lequel lesdits éléments d'étanchéité comprennent des joints toriques ou autres joints.

7. Réservoir selon une quelconque des revendications précédentes, dans lequel la plaque de déviation (62) est faite en un matériau polymère.

8. Réservoir selon une quelconque des revendications précédentes, dans lequel la plaque de déviation (62) est raccordée et s'étend dans la chambre de module (18, 20, 22, 24) à partir d'une paroi inférieure (38, 40, 42) de chaque module (2, 6, 8, 9).

9. Réservoir selon une quelconque des revendications précédentes, comprenant une pluralité de passages de sortie (26, 28, 30, 32), par exemple un associé à chaque module (2, 6, 8, 9), axialement éloignés pour permettre le retrait du liquide à différentes hauteurs du réservoir (1, 1').

10. Réservoir selon la revendication 9, dans lequel au moins un passage de sortie (26, 28, 30 32) comprend une conduite (64) qui fait saillie dans la chambre de module (18, 20, 22, 24) à une distance prédéfinie de la paroi latérale (10, 12, 14, 16) de manière à extraire le liquide d'une zone centrale ou d'une zone proximale au centre du réservoir (1, 1').

11. Réservoir selon une quelconque des revendications précédentes, comprenant au moins un passage d'alimentation (72) raccordé en amont de l'ouverture d'entrée (4) pour fournir le liquide, au moins une section (66) dudit passage (72) transitant sous le module inférieur (2), ledit module (2) comprenant au moins un élément entretoise (68) qui le lève pour empêcher l'écrasement de ladite section (66).

12. Réservoir selon une quelconque des revendications précédentes, comprenant une enveloppe extérieure (70), par exemple thermo-isolante, qui contient principalement au moins les modules (6, 8, 9) positionnés au-dessus du module inférieur (2), ladite enveloppe extérieure définissant avec les parois latérales (10, 12, 14, 16) au moins une cavité d'isolation (74).

13. Réservoir selon une quelconque des revendications précédentes, possédant une section transversale symétrique circulaire, ellipsoïde ou polygonale, par exemple carrée ou rectangulaire.

14. Réservoir selon une quelconque des revendications précédentes, modifié en ce que le module inférieur (2), le module supérieur (6) et au moins un module intermédiaire (8, 9) sont positionnés horizontalement les uns à côté des autres.
